(19) Europäisches Patentamt
European Patent Office
Office européen des brevets

(11) **EP 3 888 952 B1**

(12) **EUROPEAN PATENT SPECIFICATION**

(45) Date of publication and mention
of the grant of the patent:
**16.08.2023 Bulletin 2023/33**

(21) Application number: **21161498.7**

(22) Date of filing: **09.03.2021**

(51) International Patent Classification (IPC):
***B60C 13/00*** *(2006.01)*

(52) Cooperative Patent Classification (CPC):
**B60C 13/001**

(54) **PNEUMATIC TIRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.04.2020 JP 2020067660**

(43) Date of publication of application:
**06.10.2021 Bulletin 2021/40**

(73) Proprietor: **Sumitomo Rubber Industries, Ltd.
Kobe-shi, Hyogo-ken 651-0072 (JP)**

(72) Inventors:
• **KAWANOUE, Takahiro
Kobe-shi, Hyogo 651-0072 (JP)**
• **ISHIDA, Naoki
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**JP-A- 2015 077 930       JP-A- 2017 137 025
US-A1- 2016 137 008       US-A1- 2020 062 043
US-B2- 10 442 251**

**Description**

BACKGROUND OF THE INVENTION

Field of the Invention

The present invention relates to a pneumatic tire.

Description of the Background Art

In general, sidewall portions of a pneumatic tire are covered with rubber having a small thickness. Therefore, in the sidewall portion, projections and recesses called bulges and dents are likely to appear locally due to, for example, residual air or joint portions in a carcass that is an internal structure of the tire. The projections and recesses exert no influence on performance of the tire. However, the tire has unfavorable outer appearance.

Various pneumatic tires in which decorative patterns are formed on surfaces of the sidewall portions in order to make the projections and recesses inconspicuous have been suggested (for example, see Japanese Laid-Open Patent Publication No. 2014-136487).
JP 2017 137025 A discloses a pneumatic tire comprising the features according to the preamble of claim 1.
US 2020/0062043 A1 discloses a tire having features according to a related technology.
US 10 442 251 B2 also discloses a tire having features according to a related technology.
In addition, JP 2015 077930 A discloses a tire having features according to a related technology. Furthermore, US 2016/0137008 A1 discloses a tire having features according to a related technology.

SUMMARY OF THE INVENTION

In recent years, it is highly required to make the projections and recesses of sidewall portions more inconspicuous and further enhance outer appearance of the sidewall portions.

The present invention has been made in view of the aforementioned problems, and a main object of the present invention is to provide a pneumatic tire that allows sidewall portions to have excellent outer appearance.

This object is satisfied by a pneumatic tire comprising the features according to claim 1. The pneumatic tire includes a pair of sidewall portions. A first region having a first surface, and a second region having a second surface that projects or is recessed relative to the first surface in a sidewall portion thickness direction, are formed on a surface of at least one of the pair of sidewall portions. A projection-recess portion is formed on the second surface. A height of the projection-recess portion is less than a relative distance in the sidewall portion thickness direction between the first surface and the second surface. The first surface is smoother than the second surface. The first region and the second region alternate in a tire circumferential direction and a tire radial direction.

In the pneumatic tire of the present invention, the second region has a rectangular shape that includes a first edge extending in the tire circumferential direction, and a second edge extending in the tire circumferential direction in a portion located outward of the first edge in the tire radial direction.

Alternatively, the second region has a trapezoidal shape, and a length of the second edge is preferably greater than a length of the first edge.

In the pneumatic tire of the present invention, the at least one of the sidewall portions preferably has a second region radial row in which a plurality of the second regions are arranged in the tire radial direction, and the second region radial row is preferably inclined relative to the tire radial direction.

In the pneumatic tire of the present invention, the projection-recess portion preferably includes a plurality of linearly extending projections.

In the pneumatic tire of the present invention, the linear projections are preferably inclined relative to the tire radial direction.

In the pneumatic tire of the present invention, the two second regions adjacent to each other in the tire circumferential direction preferably include a portion in which the two second regions overlap each other in the tire radial direction.

In the pneumatic tire of the present invention, the two second regions adjacent to each other in the tire radial direction preferably include a portion in which the two second regions overlap each other in the tire circumferential direction.

In the pneumatic tire of the present invention, the plurality of linearly extending projections are preferably arranged in parallel with each other in the projection-recess portion. It is preferable that, on a transverse cross-section of the plurality of projections, the closer the projection is to the first region, the higher the projection is.

In the pneumatic tire of the present invention, the second surface is preferably recessed relative to the first surface.

In the pneumatic tire of the present invention, the second surface preferably projects relative to the first surface.

The present invention can provide a pneumatic tire that allows a sidewall portion to have excellent outer appearance by adopting the above-described structure.

BRIEF DESCRIPTION OF THE DRAWINGS

   FIG. 1 is an enlarged view of a sidewall portion of a tire according to an embodiment of the present invention;
   FIG. 2 is an enlarged perspective view of a second region in FIG. 1;
   FIG. 3 is an enlarged view of a sidewall portion according to another embodiment;
   FIG. 4 is an enlarged view of a sidewall portion according to an unclaimed example;
   FIG. 5 is an enlarged view of a sidewall portion according to another embodiment of the invention;
   FIG. 6 is a cross-sectional view of a projection-recess portion in FIG. 2;
   FIG. 7 is a cross-sectional view of a projection-recess portion according to another embodiment;
   FIG. 8 is an enlarged perspective view of a second region according to another embodiment;
   FIG. 9 is an enlarged perspective view of a second region according to another embodiment;
   FIG. 10 is an enlarged perspective view of a second region according to another embodiment; and
   FIG. 11 is an enlarged view of a sidewall portion of a tire of a comparative example.

DESCRIPTION OF THE PREFERRED EMBODIMENTS

An embodiment of the present invention will be described below with reference to the drawings.

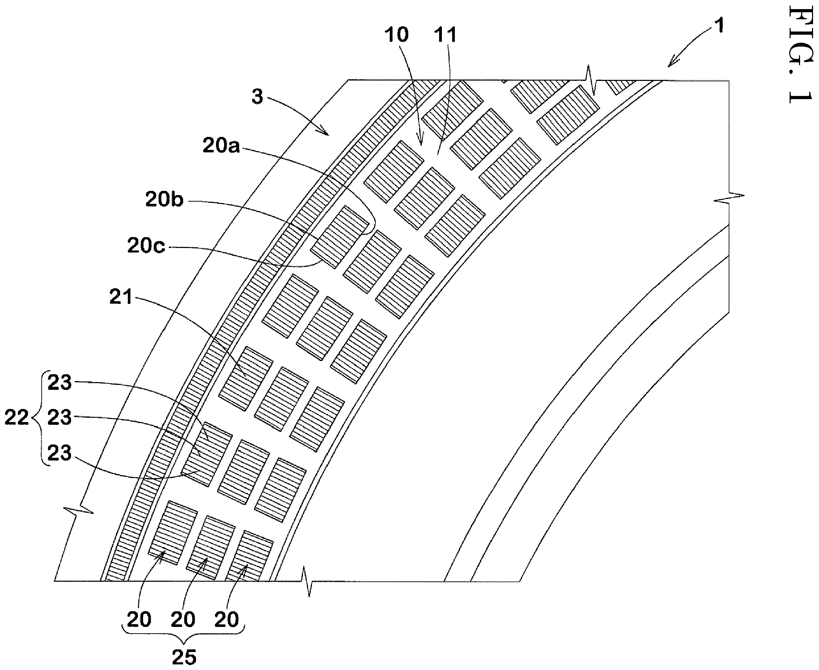

FIG. 1 is an enlarged view of a sidewall portion 3 of a pneumatic tire (hereinafter, may be simply referred to as "tire") 1 according to the present embodiment. The tire 1 of the present embodiment has a pair of the sidewall portions 3 on both sides of a tread portion 2. The tire 1 of the present embodiment is for a passenger car. However, the present invention is not limited thereto, and the tire may be, for example, a motorcycle tire or a heavy duty tire.

In the description herein, unless otherwise specified, dimensions and the like of each component of the tire 1 are measured in a normal state. In the case of a pneumatic tire for which various standards are specified, the "normal state" refers to a state where the tire is mounted on a normal rim and inflated with a normal internal pressure, and is under no load. In the case of a tire for which various standards are not specified, the normal state refers to a standard usage state under no load according to the usage of the tire. An ordinary tolerance for a rubber molded product is allowed for each component described herein.

The "normal rim" represents a rim that is defined by a standard, in a standard system including the standard with which the tire complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

In the tire 1 of the present embodiment, on a surface of at least one of the paired sidewall portions 3, a first region 10 having a first surface 11 and a second region 20 having a second surface 21 that projects or is recessed relative to the first surface 11 in a sidewall portion thickness direction are formed. The "sidewall portion thickness direction" refers to a thickness direction of rubber, of the sidewall portion, disposed outward of a carcass.

A relative distance in the sidewall portion thickness direction between the first surface 11 and the second surface 21 is, for example, not greater than 2.0 mm. The distance is preferably 0.2 to 1.5 mm and more preferably 0.4 to 1.0 mm. However, the present invention is not limited thereto.

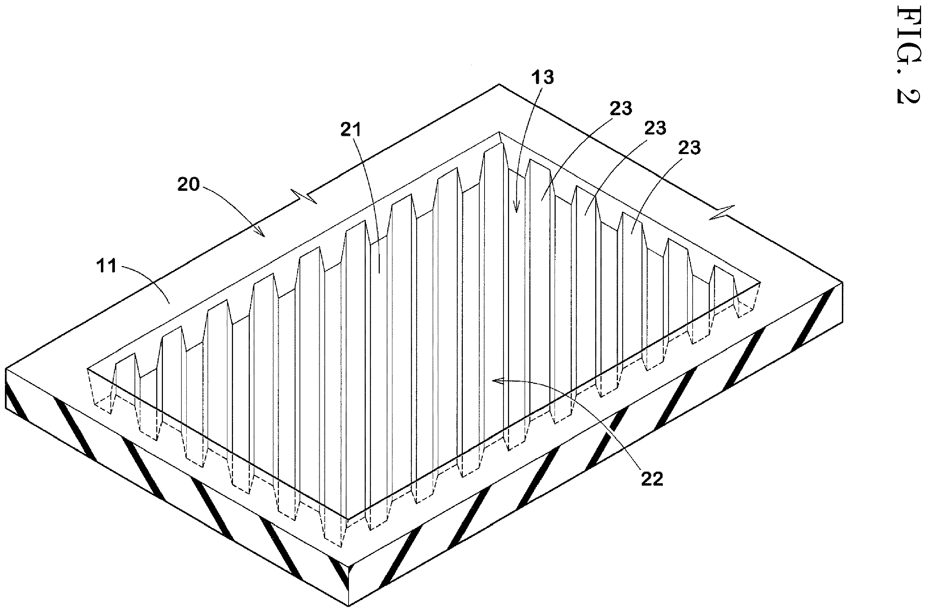

FIG. 2 is an enlarged perspective view of the second region 20 according to the present embodiment. As shown in FIG. 2, the second surface 21 of the second region 20 has a projection-recess portion 22 formed therein. In the present embodiment, the projection-recess portion 22 includes a plurality of linearly extending projections 23. The "linearly extending projection" refers to such a projection that the top portion of the projection extends in any direction and the projection thus has a length direction along the above-described top portion extending direction and a width direction orthogonal to the length direction. In the present embodiment, the projection 23 linearly extends. However, the projection 23 may extend so as to be curved. However, the projection 23 is not limited thereto. A height of the projection-recess portion 22 is less than the relative distance in the sidewall portion thickness direction between the first surface 11 and the second surface 21.

The first surface 11 is smoother than the second surface 21. That is, regardless of whether the first surface 11 is a flat surface or has a projection-recess portion, an average value of the projecting and recessed heights of the first surface 11 is less than an average value of the projecting and recessed heights of the projection-recess portion 22 of the second surface 21. This structure is such that a user of the tire can recognize that the first surface 11 is flatter than the second surface 21, at least when visually observing the first surface 11 and the second surface 21 with normal attention. In the present embodiment, the first surface 11 is shaped in a flat surface which does not include the visually recognized projections and recesses.

As shown in FIG. 1, in the present invention, the first region 10 and the second region 20 alternate in the tire circumferential direction and the tire radial direction. In the present invention, the pneumatic tire has the above-described structure, whereby the pneumatic tire allows the sidewall portion 3 to have excellent outer appearance. This is assumed to be achieved by the following mechanism.

In the present invention, the second surface 21 has the projection-recess portion 22, whereas the first surface 11 is smoother than the second surface 21. Therefore, contrast of light occurs between the first surface 11 and the second surface 21. Particularly, the above-described projection-recess portion 22 causes the contrast also in a case where the sidewall portion 3 is observed from the various directions. Thus, a person who observes the surface of the sidewall portion 3 is likely to pay attention to the first region 10 and the second region 20, and is unlikely to pay attention to the local projections and recesses, of the sidewall portion 3, called bulges and dents. This mechanism is assumed to make the bulges and dents inconspicuous, and consequently provide a pneumatic tire that allows the sidewall portion 3 to have excellent outer appearance.

The structure of the present embodiment will be described below in more detail. As shown in FIG. 1, in the present embodiment, the sidewall portion 3 has a plurality of the second regions 20 disposed therein, and is smooth on almost the entirety of the outer surface except for the second regions 20.

The shape (shape formed by a boundary between the first region 10 and the second region 20) of the second region 20 is, for example, rectangular. In the present embodiment, the second region 20 has a laterally elongated rectangular shape in which the length in the tire circumferential direction is greater than the length in the tire radial direction. The second region 20 has a rectangular shape that includes a first edge 20a extending in the tire circumferential direction and a second edge 20b extending in the tire circumferential direction in a portion located outward of the first edge 20a in the tire radial direction, such that the first edge 20a and the second edge 20b have the same length. The length of each side is, but is not particularly limited to, for example, 2 to 10 mm and preferably 4 to 8 mm. The length of a third edge 20c that extends from the first edge 20a to the second edge 20b is less than the length of the first edge 20a. The length of the third edge 20c is, for example, 35% to 75% of the length of the first edge 20a and preferably 45% to 65% thereof. Thus, the outer appearance of the sidewall portion 3 is further enhanced.

The shape of the second region 20 is not limited to such a shape. As the shape of the second region 20, various shapes such as a square, trapezoidal, polygonal, round, and ellipsoidal shapes can be adopted.

In the present embodiment, the sidewall portion 3 has a second region radial row 25 in which a plurality of the second regions 20 are arranged in the tire radial direction. In the present embodiment, the second region radial row 25 includes a plurality of the second regions 20 aligned along the tire radial direction. The second region radial row 25 having such a structure allows the projections and recesses (bulges and dents) formed in the sidewall portion to be effectively made inconspicuous (hereinafter, such an effect may be referred to as enhancement of camouflaging performance).

The sidewall portion 3 includes a plurality of the second region radial rows 25 in the tire circumferential direction. Thus, the sidewall portion 3 also has the second regions 20 aligned in the tire circumferential direction.

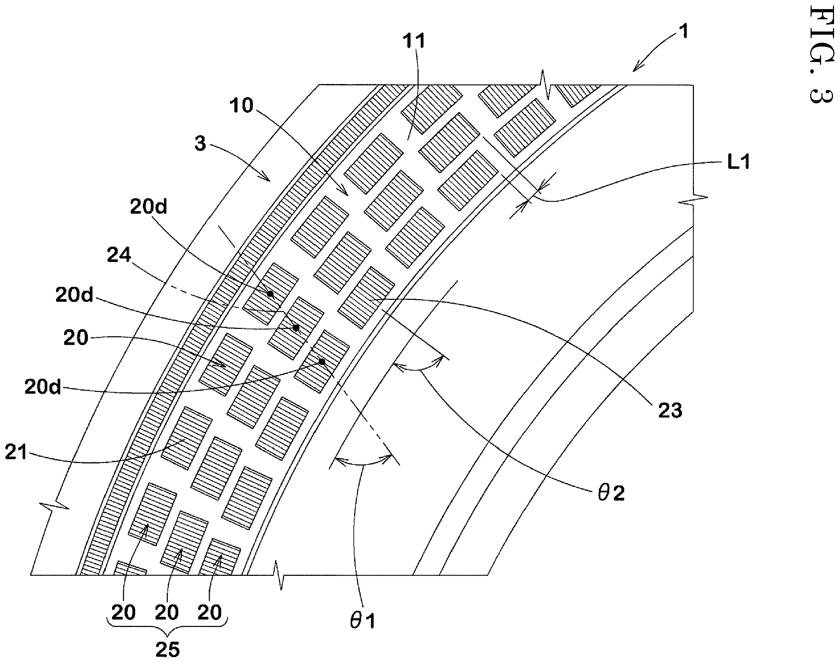

The arrangement of the second regions 20 is not limited to the above-described arrangement. FIG. 3 to FIG. 5 are each an enlarged view of the sidewall portion 3 of a tire according to another embodiment of the present invention.

As shown in FIG. 3, in the present embodiment, the second region radial row 25 is inclined relative to the tire radial direction. Such arrangement of the second regions 20 can regulate air flowing along the outer surface of the sidewall portion 3 during running. Thus, for example, air resistance in the tire can be expected to be reduced during running.

In the present embodiment, an imaginary line 24 connecting between centroids 20d of the second regions 20 adjacent to each other in the tire radial direction is inclined at, for example, 45° or smaller angle relative to the tire radial direction. The angle of the imaginary line 24 relative to the tire radial direction is preferably 10 to 45° and more preferably 20 to 40°. Thus, excellent camouflaging performance can be exhibited. In the present embodiment, the camouflaging performance can be expected to be further enhanced by a combination of inclination of the second region radial rows 25 and inclination of the linearly extending projections 23.

In the embodiment shown in FIG. 3, in a more preferable mode, an angle θ1 of the imaginary line 24 relative to the tire circumferential direction and an angle θ2 of the linearly extending projection 23 relative to the tire circumferential direction preferably satisfy the following expression (1). Thus, camouflaging performance is further enhanced.

$$45° < \theta1 \leq \theta2 \cdots (1)$$

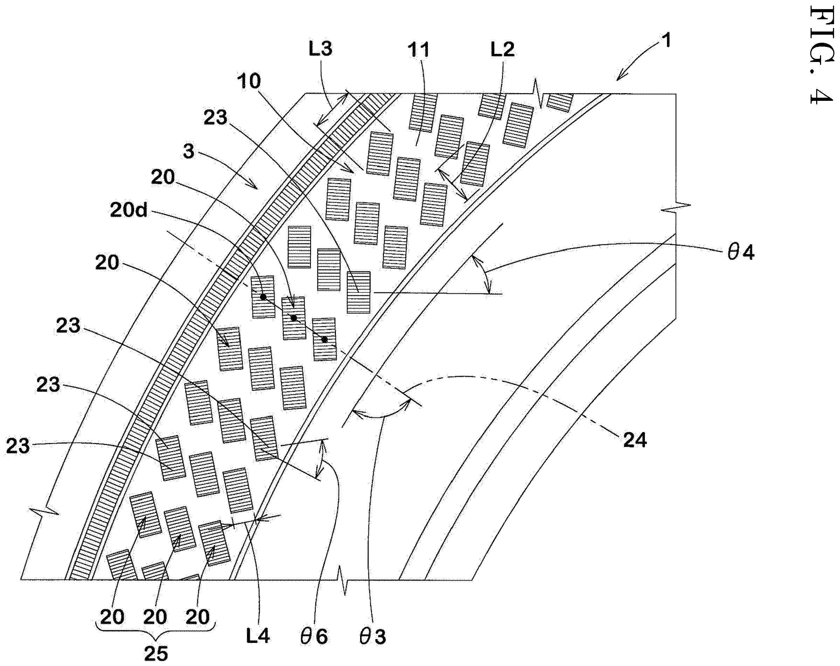

According to an unclaimed example as shown in FIG. 4, the second region radial row 25 includes, in the tire radial direction, a plurality of the second regions 20 each of which has a laterally elongated rectangular shape and is inclined relative to the tire radial direction.

In the present embodiment, the linear projection 23 of the second region 20 is inclined relative to the tire radial direction. An angle of the linear projection 23 relative to the tire radial direction is preferably not less than 20°, more preferably not less than 30°, and even more preferably not less than 35°, and preferably not greater than 60°, more preferably not greater than 50°, and even more preferably not greater than 45°. Thus, camouflaging performance can be expected to be made high by a combination of inclination of the entirety of the second regions 20 and inclination of the projections 23. Furthermore, defective molding can be effectively inhibited during vulcanization molding by applying the above-described structure to the recessed second region 20 shown in FIG. 2. Hereinafter, such an effect may be referred to as "enhancement of vulcanization molding performance".

In the present embodiment, in a more preferable mode, an angle $\theta 3$ of the imaginary line 24 connecting between the centroids 20d of the second regions 20 relative to the tire circumferential direction and an angle $\theta 4$ of the linear projection 23 of the second region 20 relative to the tire circumferential direction preferably satisfy the following expression (2). Thus, camouflaging performance is further enhanced. Such arrangement of the second regions 20 and the projections 23 also serves to disperse a frequency band of noise which occurs by turbulence caused by the second regions 20 and the projections 23, and inhibit deterioration of noise performance.

$$45°<\theta 4<60°<\theta 3 \cdots (2)$$

Two second regions 20 adjacent to each other in the tire circumferential direction preferably include a portion in which the two second regions 20 overlap each other in the tire radial direction. That is, an imaginary region obtained by extending one of the two second regions 20 along the tire circumferential direction overlaps the other of the two second regions 20. The overlapping length of the imaginary region in the tire radial direction is preferably not less than 50% of the length of one second region 20 in the tire radial direction, and more preferably not less than 80% thereof. In the present embodiment, the two second regions 20 entirely overlap each other.

Two second regions 20 adjacent to each other in the tire radial direction preferably include a portion in which the two second regions 20 overlap each other in the tire circumferential direction. That is, an imaginary region obtained by extending one of the two second regions 20 along the tire radial direction overlaps the other of the two second regions 20. The overlapping length of the imaginary region in the tire circumferential direction is preferably not less than 50% of the length of one second region 20 in the tire circumferential direction, and more preferably not less than 80% thereof. In the present embodiment, the two second regions 20 entirely overlap each other. In the present embodiment, camouflaging performance can be expected to be further enhanced by synergistic effect of the above-described structure and the linearly extending projections 23.

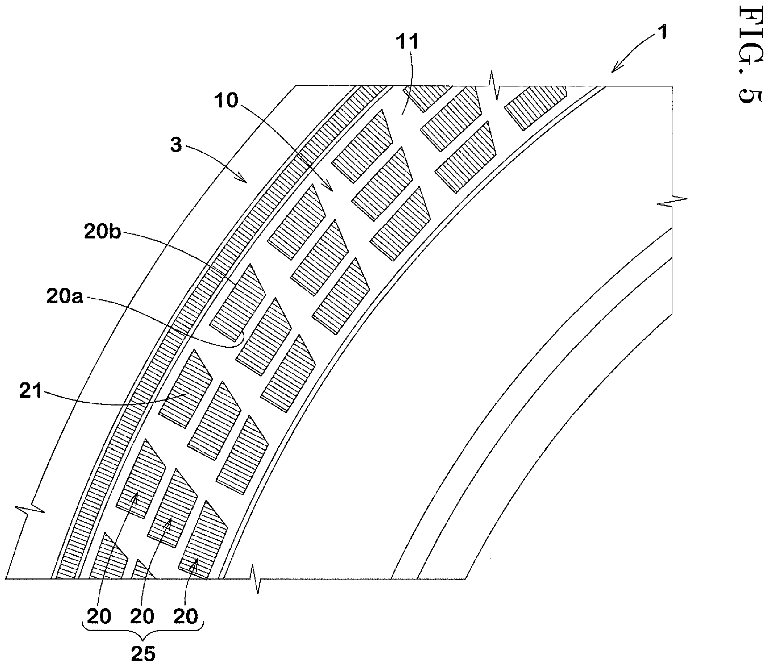

In the embodiment shown in FIG. 5, the second region 20 has a trapezoidal shape. In the present embodiment, the first edge 20a, of the second region 20, extending in the tire circumferential direction and the second edge 20b extending in the tire circumferential direction in a portion located outward of the first edge 20a in the tire radial direction are parallel to each other, and the length of the second edge 20b is greater than the length of the first edge 20a. The length of the second edge 20b is, for example, not greater than 2.0 times the length of the first edge 20a. The length of the second edge 20b is preferably 1.1 to 1.8 times the length of the first edge 20a and more preferably 1.2 to 1.5 times the length of the first edge 20a. Thus, excellent camouflaging performance can be exhibited. Particularly, in a case where the second regions 20 arranged as shown in FIG. 5 and a structure in which the linear projections 23 are inclined relative to the tire radial direction are combined, the pattern on the outer surface of the sidewall portion becomes more complicated, and camouflaging performance can be expected to be further enhanced.

As shown in FIG. 2, in the present embodiment, the second surface 21 is recessed relative to the first surface 11. However, the present invention is not limited thereto. As described below, the second surface 21 may project relative to the first surface 11.

In the projection-recess portion 22, for example, a state where "a plurality of the projections 23 are parallel to each other" representing a state where a plurality of the linearly extending projections 23 are arranged in parallel with each other, includes a state where an ordinary tolerance for a rubber product is included and a difference among angles of the plurality of projections 23 is not greater than 5°.

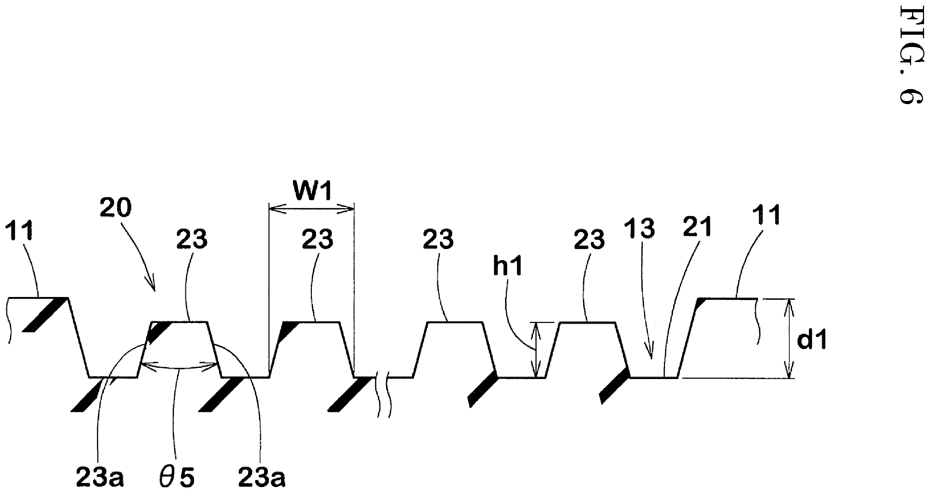

FIG. 6 shows a transverse cross-section orthogonal to the length direction of the plurality of projections 23. As shown in FIG. 6, the cross-sectional shape of the projection 23 is, for example, trapezoidal. In the present embodiment, the projections 23 having the trapezoidal cross-section are arranged in the recessed second region 20, whereby excellent vulcanization molding performance is exhibited. However, the present invention is not limited thereto, and the projection 23 may have, for example, a semicircular or a triangular cross-section.

A height h1 of each projection 23 is, for example, less than a relative distance d1 in the sidewall portion thickness direction between the first surface 11 and the second surface 21. The height h1 of the projection 23 is preferably not less than 40% of the relative distance d1 and more preferably not less than 50% thereof, and preferably not greater than 80% thereof and more preferably not greater than 70% thereof. Thus, the above-described effect is exhibited and defective vulcanization molding is inhibited.

The projection 23 includes two inclined surfaces 23a that extend from the second surface 21. An angle $\theta5$ between the two inclined surfaces 23a is, for example, 10 to 90° and preferably 20 to 40°. A width W1 of the projection 23 is, for example, 0.2 to 0.6 mm.

In the embodiment shown in FIG. 3, the relative distance d1 is preferably less than a shift distance L1, in the tire circumferential direction, between the second regions 20 adjacent to each other in the tire radial direction. Specifically, the relative distance d1 and the shift distance L1 preferably satisfy the following expression (3). Thus, camouflaging performance is sufficiently exhibited, the rubber thickness of the sidewall portion 3 can be inhibited from excessively varying, and durability of the sidewall portion 3 is enhanced.

$$0.01L1 < d1 < 0.30L1 \cdots (3)$$

In the embodiment shown in FIG. 3, the angle $\theta5$ (shown in FIG. 6) of the projection 23, the angle $\theta2$ of the projection relative to the tire circumferential direction, and the angle $\theta1$ of the imaginary line 24 relative to the tire circumferential direction preferably satisfy the relationship of the following expression (4). Thus, light reflected by the sidewall portion 3 is more easily dispersed and camouflaging effect is further enhanced.

$$\theta5 < \theta1 < \theta2 \cdots (4)$$

In the unclaimed example shown in FIG. 4, an overlapping length L2 over which the two second regions 20 adjacent to each other in the tire circumferential direction overlap each other in the tire radial direction, an overlapping length L3 over which the two second regions 20 adjacent to each other in the tire radial direction overlap each other in the tire circumferential direction, and the relative distance d1 preferably satisfy the relationship of the following expression (5). By specifying the upper limit of the relative distance d1 as described above, excessive reduction of the rubber thickness of the sidewall portion can be inhibited, and durability of the sidewall portion 3 is enhanced.

$$d1 < L3 \leq L2 \cdots (5)$$

In a more preferable mode of the unclaimed example shown in FIG. 4, the relative distance d1, an entire length L4 of the projection 23, and the angle $\theta6$ of the projection relative to the tire radial direction preferably satisfy the relationship of the following expression (6). Thus, the projection 23 is inhibited from being broken when, for example, the second region 20 collides with a curbstone or the like, and, moreover, excellent camouflaging effect can be exhibited.

$$d1 < L2 \times \sin\theta6 \cdots (6)$$

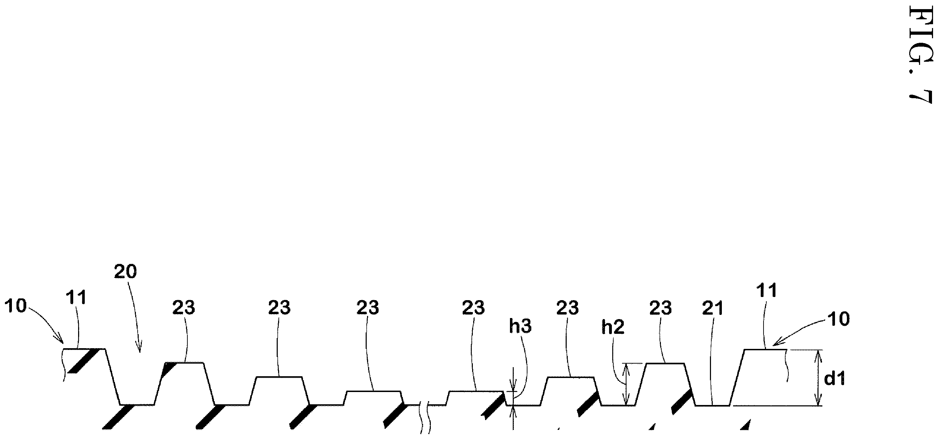

FIG. 7 shows another embodiment of the projection-recess portion 22. As shown in FIG. 7, in the present embodiment, on the transverse cross-section of the plurality of projections 23, the closer the projection 23 is to the first region 10, the higher the projection 23 is. A maximum value h2 of the height of the projection 23 in one projection-recess portion 22 is, for example, 50% to 95% of the relative distance d1 in the sidewall portion thickness direction between the first surface 11 and the second surface 21, and preferably 70% to 80% thereof. A minimum value h3 of the height of the projection 23 in one projection-recess portion 22 is, for example, 5% to 50% of the relative distance d1 and preferably 20% to 30% thereof. In the projection-recess portion 22 having such a structure, the second region 20 is allowed to have gradation, and camouflaging performance is further enhanced. Furthermore, such a structure allows the vulcanization mold for forming the above-described projection-recess portion 22 to reduce air accumulation, thereby enhancing vulcanization molding performance.

Particularly, by applying the above-described projection-recess portion 22 to the second regions 20 arranged as shown in FIG. 3 to FIG. 5, the camouflaging performance and vulcanization molding performance can be enhanced in a well-balanced manner.

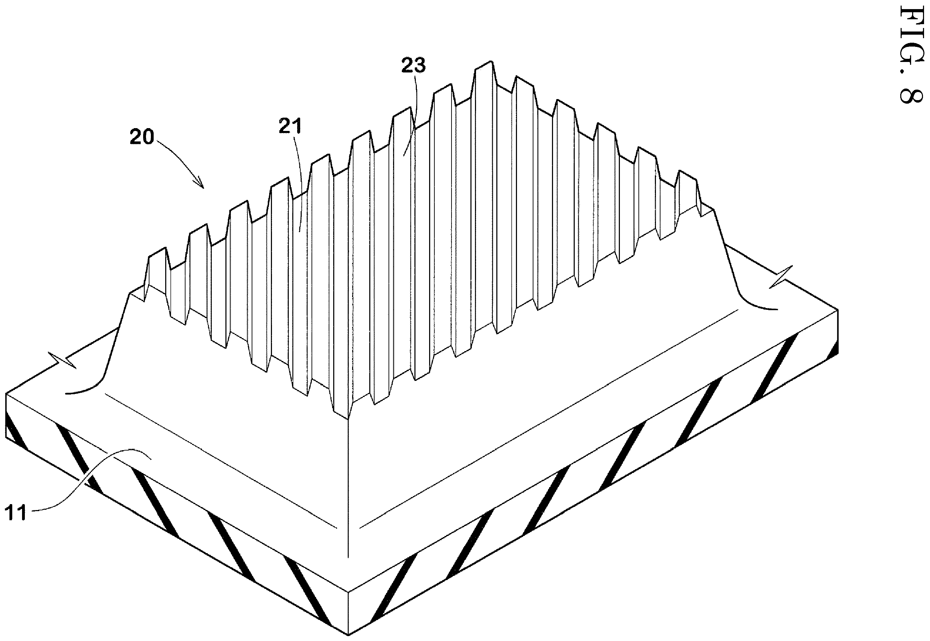

FIG. 8 to FIG. 10 are each an enlarged perspective view of the second region 20 according to still another embodiment. As shown in FIG. 8, the second surface 21 of the second region 20 projects relative to the first surface 11. The second surface 21 having such a structure guides air flowing on the outer surface of the sidewall portion 3 to a wheel house side during running, thereby generating downforce for pressing the tire against the road surface side. Furthermore, the second region 20 having such a structure facilitates heat dissipation during running, and also serves to cool the outer surface of the sidewall portion 3. Thus, durability of the sidewall portion 3 can be enhanced.

In the present embodiment, by applying the above-described linearly extending projections 23 to the second region 20, heat dissipation properties as well as camouflaging performance is enhanced, and durability of the sidewall portion 3 is further enhanced.

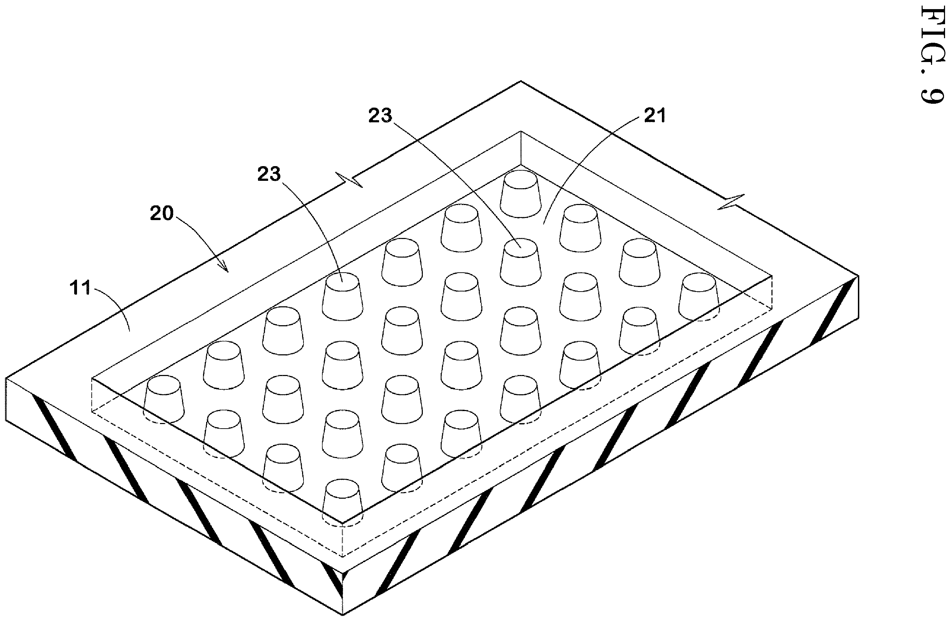

In the second region 20 shown in FIG. 9, the second surface 21 is recessed relative to the first surface 11, and has a plurality of truncated-cone-shaped projections 23 disposed thereon. Light is reflected in multiple directions by the second region 20 having such a structure, and contrast with the first region 10 can be increased. By applying the above-described structure to the second regions 20 arranged as shown in FIG. 3 to FIG. 5, camouflaging performance is further enhanced.

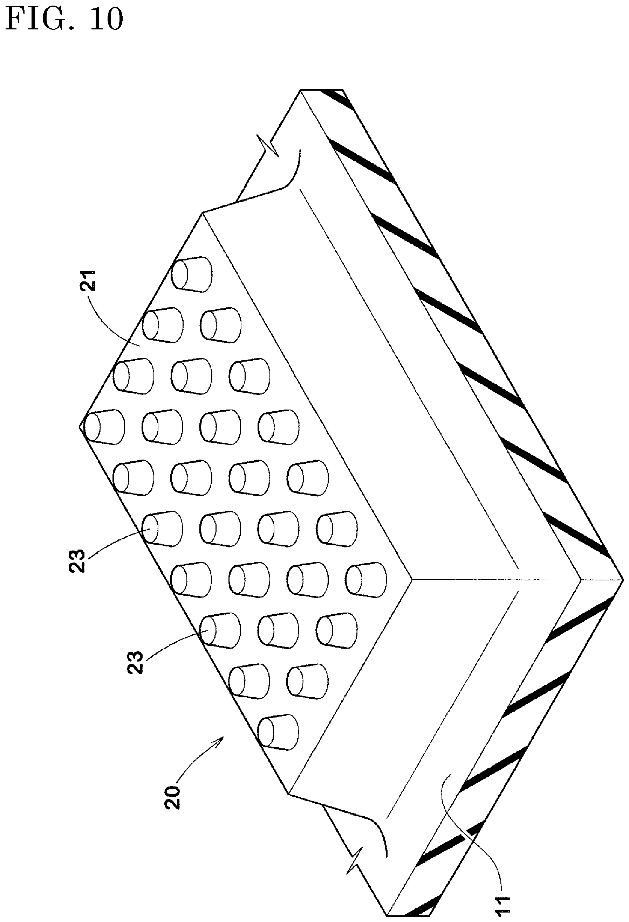

In the second region 20 shown in FIG. 10, the second surface 21 projects relative to the first surface 11, and has a plurality of truncated-cone-shaped projections 23 disposed thereon. In the second region 20 having such a structure, excellent camouflaging performance is exhibited, and the projecting second region 20 exhibits high heat dissipating performance. Therefore, in the present embodiment, the second region 20 contributes to enhancement of durability of the sidewall portion 3.

By applying the above-described structure to the second regions 20 arranged as shown in FIG. 3 to FIG. 5, camouflaging performance is further enhanced, and each second region 20 can act as a protector of the sidewall portion 3. Therefore, such a structure can also enhance durability of the sidewall portion 3 during off-road running.

It should be understood that the above-described structures can be applied to a pneumatic tire in combination.

Particularly preferable embodiments of the present invention have been described above in detail. However, the present invention is not limited to the illustrated embodiments, and various modifications can be made to implement the present invention.

[Examples]

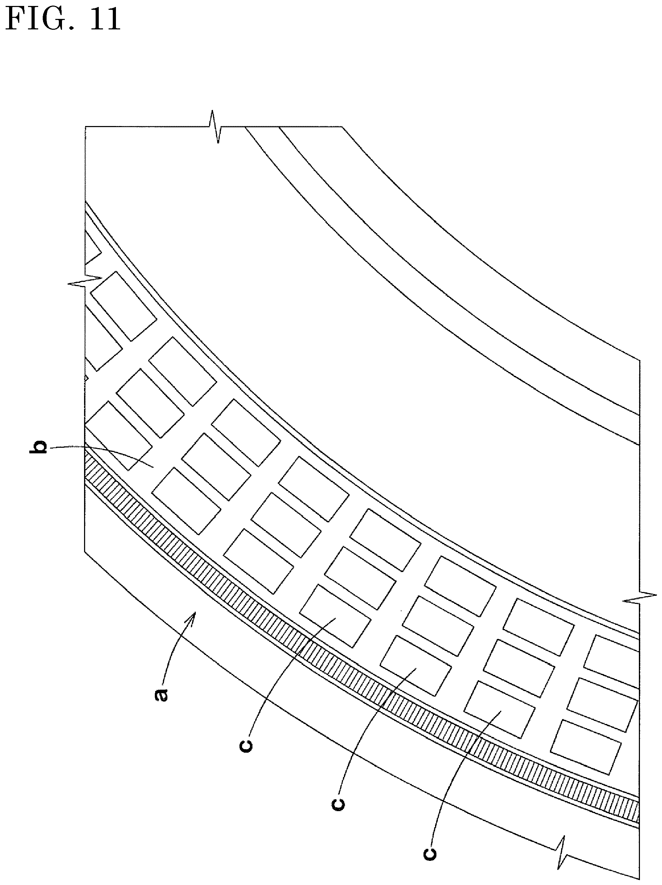

A pneumatic tire having a size of 205/55R16 and including the sidewall portion shown in FIG. 1 was produced. A pneumatic tire as a sample tire having a sidewall portion a shown in FIG. 11 was produced as a comparative example. In the sidewall portion a of the comparative example, a plurality of regions c were arranged so as to be recessed relative to a flat-surface-shaped region b. The outer surface of the region c was flat-surface-shaped similarly to the region b. The other components were substantially the same as those of the tires of examples. Each test tire was tested for camouflaging performance. The specifications common to the test tires and a test method were as follows.

Rim on which each tire was mounted: 16×6.5J
Tire internal pressure: 200 kPa

<Camouflaging performance>

Observers visually checked the outer surface of each sidewall portion from various directions outdoors in fine weather, and made sensory evaluation for occurrence of projections and recesses (bulges and dents) at the sidewall portion. 20 evaluators made the evaluation. Each evaluator made a five-point evaluation for camouflaging performance of each test tire by selecting one from one point to five point. The total of the points evaluated by the 20 evaluators was set as a score indicating the camouflaging performance of each test tire. The result indicated below was calculated by conversion based on the total of the points for the comparative example being 100. The greater the value is, the more excellent camouflaging performance is.

The test result is indicated in Table 1.

[Table 1]

|  | Comp. Ex. | Ex. 1 | Ex. 2 | Ex. 3 | Ex. 4 | Ex. 5 | Ex. 6 | Ex. 7 |
|---|---|---|---|---|---|---|---|---|
| Figure indicating sidewall portion | FIG. 11 | FIG. 1 | FIG. 3 | FIG. 4 | FIG. 5 | FIG. 1 | FIG. 1 | FIG. 1 |
| Figure indicating second region | - | FIG. 2 | FIG. 2 | FIG. 2 | FIG. 2 | FIG. 7 | FIG. 8 | FIG. 9 |
| Camouflaging performance (Score) | 100 | 120 | 122 | 124 | 126 | 120 | 118 | 118 |

The test result indicates that the tires of the examples allowed projections and recesses of the sidewall portions to be effectively made inconspicuous. That is, according to the present invention, it can be confirmed that a pneumatic tire that allows a sidewall portion to have excellent outer appearance can be provided.

**Claims**

1.  A pneumatic tire (1) comprising:

    a pair of sidewall portions (3), wherein
    a first region (10) having a first surface (11), and a second region (20) having a second surface (21) that projects or is recessed relative to the first surface (11) in a sidewall portion thickness direction, are formed on a surface of at least one of the pair of sidewall portions (3),
    a projection-recess portion (22) is formed on the second surface (21),
    a height of the projection-recess portion (22) is less than a relative distance (d1) in the sidewall portion thickness direction between the first surface (11) and the second surface (21),
    the first surface (11) is smoother than the second surface (21), and
    the first region (10) and the second region (20) alternate in a tire circumferential direction and a tire radial direction, **characterized in that**
    the second region (20) includes a first edge (20a) extending in the tire circumferential direction, and a second edge (20b) extending in the tire circumferential direction in a portion located outward of the first edge (20a) in the tire radial direction, and
    the second region (20) has a rectangular shape or
    the second region (20) has a trapezoidal shape in which the first edge (20a) and the second edge (20b) are parallel to each other and a length of the second edge (20b) is greater than a length of the first edge (20a).

2.  The pneumatic tire (1) according to claim 1, wherein

    the at least one of the sidewall portions (3) has a second region radial row (25) in which a plurality of the second regions (20) are arranged in the tire radial direction, and
    the second region radial row (25) is inclined relative to the tire radial direction.

3.  The pneumatic tire (1) according to claim 1 or 2, wherein the projection-recess portion (22) includes a plurality of linearly extending projections (23).

4.  The pneumatic tire (1) according to claim 3, wherein the linear projections (23) are inclined relative to the tire radial direction.

5.  The pneumatic tire (1) according to claim 3 or 4, wherein

    the plurality of linearly extending projections (23) are arranged in parallel with each other in the projection-recess portion (22), and
    on a transverse cross-section of the plurality of projections (23), the closer the projection (23) is to the first region (10), the higher the projection (23) is.

6.  The pneumatic tire (1) according to any one of claims 1 to 5, wherein the two second regions (20) adjacent to each other in the tire circumferential direction include a portion in which the two second regions (20) overlap each other in the tire radial direction.

7.  The pneumatic tire (1) according to any one of claims 1 to 6, wherein the two second regions (20) adjacent to each other in the tire radial direction include a portion in which the two second regions (20) overlap each other in the tire circumferential direction.

8.  The pneumatic tire (1) according to any one of claims 1 to 7, wherein the second surface (21) is recessed relative to the first surface (11).

9.  The pneumatic tire (1) according to any one of claims 1 to 7, wherein the second surface (21) projects relative to the first surface (11).

**Patentansprüche**

1.  Luftreifen (1), umfassend:

    ein Paar von Seitenwandabschnitten (3), wobei
    ein erster Bereich (10) mit einer ersten Oberfläche (11) und ein zweiter Bereich (20) mit einer zweiten Oberfläche (21), die in einer Seitenwandabschnitt-Dickenrichtung relativ zu der ersten Oberfläche (11) hervorsteht oder vertieft ist, an einer Oberfläche zumindest eines von dem Paar der Seitenwandabschnitte (3) gebildet sind,
    ein Vorsprungs-Vertiefungsabschnitt (22) an der zweiten Oberfläche (21) gebildet ist,
    eine Höhe des Vorsprungs-Vertiefungsabschnitts (22) kleiner als eine Relativdistanz (d1) in der Seitenwandabschnitts-Dickenrichtung zwischen der ersten Oberfläche (11) und der zweiten Oberfläche (21) ist,
    die erste Oberfläche (11) glatter als die zweite Oberfläche (21) ist, und
    der erste Bereich (10) und der zweite Bereich (20) in einer Reifenumfangsrichtung und einer Reifenradialrichtung abwechseln,
    **dadurch gekennzeichnet, dass**
    der zweite Bereich (20) einen ersten Rand (20a), der sich in der Reifenumfangsrichtung erstreckt, und einen zweiten Rand (20b) aufweist, der sich in der Reifenumfangsrichtung in einem Abschnitt erstreckt, der in der Reifenradialrichtung außerhalb des ersten Randes (20a) angeordnet ist, und
    der zweite Bereich (20) eine Rechteckform aufweist oder
    der zweite Bereich (20) eine Trapezform aufweist, in welcher der erste Rand (20a) und der zweite Rand (20b) parallel zueinander sind und eine Länge des zweiten Randes (20b) größer als eine Länge des ersten Randes (20a) ist.

2.  Luftreifen (1) nach Anspruch 1, wobei

    der zumindest eine der Seitenwandabschnitte (3) eine Zweitbereich-Radialreihe (25) aufweist, in der mehrere der zweiten Bereiche (20) in der Reifenradialrichtung angeordnet sind, und
    die Zweitbereich-Radialreihe (25) relativ zu der Reifenradialrichtung geneigt ist.

3.  Luftreifen (1) nach Anspruch 1 oder 2, wobei der Vorsprungs-Vertiefungsabschnitt (22) mehrere sich linear erstreckende Vorsprünge (23) umfasst.

4.  Luftreifen (1) nach Anspruch 3, wobei die linearen Vorsprünge (23) relativ zu der Reifenradialrichtung geneigt sind.

5.  Luftreifen (1) nach Anspruch 3 oder 4, wobei

    die mehreren sich linear erstreckenden Vorsprünge (23) in dem Vorsprungs-Vertiefungsabschnitt (22) parallel zueinander angeordnet sind und
    der Vorsprung (23) in einem quer verlaufenden Querschnitt der mehreren Vorsprünge (23) um so höher ist, je näher der Vorsprung (23) an dem ersten Bereich (10) liegt.

6.  Luftreifen (1) nach einem der Ansprüche 1 bis 5, wobei die zwei zweiten Bereiche (20), die in der Reifenumfangsrichtung zueinander benachbart sind, einen Abschnitt aufweisen, in dem sich die zwei zweiten Bereiche (20) in der Riefenradialrichtung einander überlagern.

7.  Luftreifen (1) nach einem der Ansprüche 1 bis 6, wobei die zwei zweiten Bereiche (20), die in der Reifenradialrichtung einander benachbart sind, einen Abschnitt aufweisen, in dem sich die zwei zweiten Bereiche (20) in der Reifenumfangsrichtung einander überlagern.

8.  Luftreifen (1) nach einem der Ansprüche 1 bis 7, wobei die zweite Oberfläche (21) relativ zu der ersten Oberfläche (11) vertieft ist.

9.  Luftreifen (1) nach einem der Ansprüche 1 bis 7, wobei die zweite Oberfläche (21) relativ zu der ersten Oberfläche (11) hervorsteht.

**Revendications**

1. Bandage pneumatique (1) comprenant :

   une paire de portions formant parois latérales (3), dans lequel une première région (10) ayant une première surface (11), et une seconde région (20) ayant une seconde surface (21) qui est en projection ou en évidement relativement à la première surface (11) dans une direction d'épaisseur de portion formant paroi latérale, sont formées sur une surface de l'une au moins de la paire de portions formant parois latérales (3),
   une portion en projection/évidement (22) est formée sur la seconde surface (21),
   une hauteur de la portion en projection/évidement (22) est inférieure à une distance relative (d1) dans la direction d'épaisseur de portion formant paroi latérale entre la première surface (11) et la seconde surface (21),
   la première surface (11) est plus lisse que la seconde surface (21), et
   la première région (10) et la seconde région (20) sont en alternance dans une direction circonférentielle du pneumatique et une direction radiale du pneumatique,
   **caractérisé en ce que**
   la seconde région (20) inclut un premier bord (20a) qui s'étend dans la direction circonférentielle du pneumatique, et un second bord (20b) qui s'étend dans la direction circonférentielle du pneumatique dans une portion située à l'extérieur du premier bord (20a) dans la direction radiale du pneumatique, et
   la seconde région (20) a une forme rectangulaire ou
   la seconde région (20) a une forme trapézoïdale dans laquelle premier bord (20a) et le second bord (20b) sont parallèles l'un à l'autre et une longueur du second bord (20b) est supérieure à une longueur du premier bord (20a).

2. Bandage pneumatique (1) selon la revendication 1, dans lequel

   ladite au moins une des portions formant parois latérales (3) a une rangée radiale (25) de secondes régions dans laquelle une pluralité de secondes régions (20) sont agencées dans la direction radiale du pneumatique, et
   la rangée radiale (25) de secondes régions est inclinée relativement à la direction radiale du pneumatique.

3. Bandage pneumatique (1) selon la revendication 1 ou 2, dans lequel la portion en projection/évidement (22) inclut une pluralité de projections en extension linéaire (23).

4. Bandage pneumatique (1) selon la revendication 3, dans lequel les projections linéaires (23) sont inclinées relativement à la direction radiale du pneumatique.

5. Bandage pneumatique (1) selon la revendication 3 ou 4, dans lequel

   la pluralité de projections en extension linéaire (23) sont agencées parallèlement les unes aux autres dans la portion en projection/évidement (22), et
   sur une section transversale de la pluralité de projections (23), plus la projection (23) est proche de la première région (10), plus la projection (23) est haute.

6. Bandage pneumatique (1) selon l'une quelconque des revendications 1 à 5, dans lequel les deux secondes régions (20) adjacentes l'une à l'autre dans la direction circonférentielle du pneumatique incluent une portion dans laquelle les deux secondes régions (20) se chevauchent l'une et l'autre dans la direction radiale du pneumatique.

7. Bandage pneumatique (1) selon l'une quelconque des revendications 1 à 6, dans lequel les deux secondes régions (20) adjacentes l'une à l'autre dans la direction radiale du pneumatique incluent une portion dans laquelle les deux secondes régions (20) se chevauchent l'une et l'autre dans la direction circonférentielle du pneumatique.

8. Bandage pneumatique (1) selon l'une quelconque des revendications 1 à 7, dans lequel la seconde surface (21) est en évidement relativement à la première surface (11).

9. Bandage pneumatique (1) selon l'une quelconque des revendications 1 à 7, dans lequel la seconde surface (21) est en projection relativement à la première surface (11).

FIG. 1

# FIG. 2

FIG. 3

# FIG. 4

FIG. 5

FIG. 6

EP 3 888 952 B1

# FIG. 7

FIG. 8

# FIG. 9

FIG. 10

FIG. 11

**EP 3 888 952 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014136487 A
- JP 2017137025 A
- US 20200062043 A1
- US 10442251 B2
- JP 2015077930 A
- US 20160137008 A1